# EUROPÄISCHE PATENTSCHRIFT

(11) **EP 0 861 717 B1**
(45) Veröffentlichungstag und Bekanntmachung des Hinweises auf die Patenterteilung: **31.10.2001**
(21) Anmeldenummer: 98101429.3
(22) Anmeldetag: 28.01.1998
(51) Int. Cl.: B29C 47/76

(54) **Schnecken-Extrusionsvorrichtung, insbesondere Doppelschnecken-Extrusionsvorrichtung, zur Verarbeitung stark ausgasender Materialien**
Twin screw extruder for processing materials emitting high quantities of gas
Extrudeuse à deux vis pour le traitement des maitères émettant des gaz en quantité élevée

(30) Priorität: 28.02.1997 DE 19708097
(43) Veröffentlichungstag der Anmeldung: 02.09.1998
(73) Patentinhaber: Coperion Werner & Pfleiderer GmbH & Co. KG, 70469 Stuttgart (DE)
(72) Erfinder: Häring, Erwin, 70195 Stuttgart-Botnung (DE)
(74) Vertreter: Hübner, Gerd, Dipl.-Phys.

(56) Entgegenhaltungen:
- DE-A- 3 248 659
- DE-C- 915 689
- US-A- 3 751 527
- US-A- 3 963 558

## Beschreibung

Die Erfindung betrifft eine Schnecken-Extrusionsvorrichtung, insbesondere einen Doppelschnecken-Extruder, zur Verarbeitung stark ausgasender Materialien.

Bei der Verarbeitung solcher Materialien, wie sie beispielsweise für die Entgasung von flüchtigen Bestandteilen aus viskosen Medien, wie Polymer-Schmelzen, Polymer-Lösungen, Pasten usw. eingesetzt wird, fällt eine große Gas- oder Dampfmenge an, deren Abführung problematisch ist. Außer der Erreichung beispielsweise eines bestimmten Lösungsmittel-Restgehaltes ist die Begrenzung der vorgenannten Prozesse durch die betriebssichere Abführung der entstehenden großen Dampf- oder Gasmengen gegeben. Dies gilt insbesondere für Medien, deren Gehalt an flüchtigen Bestandteilen größer als 10 % - im Extremfall bei Polymerlösungen bis 90 % - ist, für feuchte Pulver oder wenn Wasser als Hilfsmedium für die Restentgasung in den Extruder eingespeist wird.

Die maximal mögliche Dampfinenge, die bei einem Entgasungsprozeß betriebssicher abgeführt werden kann, ist durch den Aufbau des Prozeßteils des Extruders sowie durch seine Betriebsweise bestimmt. So sind Anzahl, Lage und Geometrie der Entgasungsöffnungen als auch die Schneckenkonfiguration wesentliche Auslegungskriterien.

Es sind nun aus der DE 24 00 271 C2 und der DE 32 48 659 A1 Schnekken-Extrusionsvorrichtungen bekannt, die üblicherweise einen Hauptextruder zu eigentlichen Materialverarbeitung, eine Material-Einspeisungseinrichtung in Form eines Zugabetrichters, eine Material-Austragseinrichtung in Form einer Austragsdüse, gegebenenfalls eine Einspeisungseinrichtung für ein Entgasungsmittel in einen Verdampfungsbereich des Hauptextruders (wie dies bei der Vorrichtung gemäß DE 24 00 271 C2 der Fall ist) und eine Entgasungseinrichtung im Hauptextruder zur Ableitung des Gasstroms vom Verdampfungsbereich aufweisen. Über die Einspeisungseinrichtung können auch Lösungsmittel, Emulsionen, feuchte Schüttgüter, Pasten od. dgl. in den Extruder eingebracht werden.

Bei der Extrusionsvorrichtung nach DE 24 00 271 C2 wird im Gegenstromverfahren entgast, wobei in eine abgeschlossene Zone des Extruders Dampf eingeblasen wird, der Lösungsmittel aus dem zu behandelnden Material entfernt. Die Wasserdampf-Lösungsmitteldampf-Mischung wird durch eine Entlüftungseinrichtung in Form einer radial in den Hauptextruder mündenden Neben-Doppelschneckenmaschine ausgetragen. Deren eine Material-Sperre bildenden Schnecken besitzen dabei eine solche Steigung und sind in einer solchen Richtung angetrieben, daß die mitgerissenen Feststoffe bei der Entgasung zum zu behandelnden Material im Hauptextruder zurückgedrängt werden.

In Bereichen, die von der vorstehenden Entlüftungseinrichtung durch Druckschleusen abgekoppelt sind, sind weitere Entgasungsöffnungen üblicher Bauart vorgesehen.

Die mit dem vorstehend erörterten Extruder erreichbare Entgasungsaktivität ist begrenzt, da in einem bestimmten Verdampfungsbereich des Extruders immer nur eine Entgasungseinrichtung zum Einsatz kommt.

Bei dem Schneckenextruder gemäß DE 32 48 659 A1 sind ebenfalls zwei in unterschiedlichen Bereichen des Extruders angebrachte Entgasungseinrichtungen vorgesehen, die jeweils aus Doppel-Schneckenmaschinen bestehen können. Die beiden Entgasungseinrichtungen stehen jeweils mit einer eigenständigen Dekompressionszone in Verbindung, wobei zwischen den beiden Dekompressionszonen eine Anstauzone als Trennung wirkt. Die Entgasung findet also in zwei getrennten Teilströmen statt.

In den beschriebenen Fällen wird der Dampf- oder Gasstrom stromaufwärts und/oder stromabwärts von der jeweiligen Verdampfungsstelle in axialer Richtung gesehen an einer Position abgeführt. Zur Beherrschung der anfallenden Gasmengen können dabei die Öffnungen in Größe und Form unterschiedlich sein, wobei die maximalen Mengen trotzdem begrenzt sind.

Ferner ist die Betriebssicherheit einer Entgasungsöffnung entscheidend von der Gasgeschwindigkeit in den Schneckengängen und an der Austrittskante des Schneckenkanals zur Entgasungsöffnung hin abhängig. Die Gasgeschwindigkeit wiederum richtet sich nach dem an die Entgasungsöffnung angelegten Druck (Über- oder Unterdruck). Festzuhalten ist jedoch in jedem Falle, daß die Gasgeschwindigkeit von der Volumenrate des im Verdampfungsbereiches entstehenden Gases bzw. Dampfes abhängt, so daß bei Behandlung stark ausgasender Materialien und beim Anfall großer Dampfmengen die Gasgeschwindigkeit in kritische Bereiche vorstößt, die mit den üblichen Techniken nicht mehr oder nur schwer beherrschbar sind.

Die Erfindung schlägt nun zur Lösung der erörterten Problematik eine verbesserte Auslegung der Entgasungseinrichtung vor. Letztere verzweigt den Gasstrom in mindestens drei Teilströme im geschlossenen Bereich des Hauptextruders, an dem mindestens eine stromaufwärts oder stromabwärts des Verdampfungsbereiches angeordnete erste Entgasungsöffnung und mindestens zwei radial bezüglich des Hauptextruders gegenüberliegende, zwischen dem Verdampfungsbereich und der mindestens einen ersten Entgasungsöffnung angeordnete Entgasungs-Elemente vorgesehen sind. Aufgrund dieser Ausgestaltung wird die Gasgeschwindigkeit gerade in den kritischen Bereichen entsprechend der Zahl der Teilströme reduziert. Die Entgasungsleistung und damit die Durchsatzleistung des entgasenden Produktes können folglich drastisch erhöht werden.

Die zwei zusätzlichen Entgasungselemente sind vorzugsweise als radial in den Hauptextruder mündende Neben-Schneckenmaschinen ausgebildet. Hierbei können - genauso wie beim Hauptextruder - Einwellen- oder Mehrwellen-Maschinen in Gegen- oder Gleichdrallausführung zur Anwendung kommen. Die Förderrichtung der Neben-Schneckenmaschinen ist vorzugsweise in Richtung zum Hauptextruder - also entgegen dem Gasstrom - gerichtet, so daß in die Neben-Schneckenmaschinen eintretendes Material zurückgedrängt wird.

In vorteilhafter Weise sind die Schnecken der Neben-Schneckenmaschinen mit ebenen Stirnflächen versehen, die in minimalem Abstand zu den Schnecken des Hauptextruders angeordnet sind. Dadurch werden ein unbehinderter Dampfübertritt im Bereich der Teilströme gewährleistet und sogenannte "tote Ecken" vermieden.

Durch die konische Erweiterung der Schnecken der Neben-Schneckenmaschinen nach außen hin kann die Strömungsrate weiter verringert werden, was die Beherrschbarkeit großer Gasmengen zusätzlich verbessert. Für eine Abrührung extrem hoher Gas- bzw. Dampfmengen ist eine kombinierte Gleich- und Gegenstromentgasung von Vorteil, für die sowohl stromaufwärts, als auch stromabwärts des Verdampfungsbereiches eine Entgasungseinrichtung mit jeweils einer Entgasungsöffnung und zwei radial gegenüberliegenden Entgasungselementen vorzugsweise jeweils in Form von zwei Neben-Schneckenmaschinen vorgesehen ist. Damit wird praktisch eine Sechsfach-Verzweigung des Gasstromes erreicht.

Für eine weitere Verbesserung der Betriebssicherheit können zwischen der Verdampfungsstelle und den Entgasungsöffnungen Staukörper eingebaut werden, die beispielsweise vor den Mündungen der Neben-Schnekkenmaschinen oder in den Neben-Schneckenmaschinen selbst angeordnet sind.

Die Neben-Schneckenmaschinen sind vorzugsweise als Doppel-Schnekkenmaschinen ausgebildet, die in verschiedenen Lagen bezüglich der Förderrichtung des Hauptextruders - also beispielsweise mit der von ihren Schneckenachsen aufgespannten Lageebene parallel oder rechtwinklig zur Förderrichtung des Hauptextruders - an letzteren angeflanscht werden können.

Durch unterschiedliche Förderrichtungen und/oder Steigungen der Schnekken der radial gegenüberliegenden Neben-Schneckenmaschinen kann eine selektive Beeinflussung des Materials, z. B. ein gezielter Schmutzaustrag, erzielt werden.

Weitere Merkmale, Einzelheiten und Vorteile der Erfindung sind der nachfolgenden Beschreibung entnehmbar, in der verschiedene Ausführungsbeispiele des Erfindungsgegenstandes anhand der beigefügten Zeichnungen näher erläutert werden. Es zeigen:
- Fig. 1 bis 3: schematische Darstellungen einer Extrusionsvorrichtung in Draufsicht mit unterschiedlichen Dreifachverzweigungen,
- Fig. 4: eine schematische Darstellung einer Extrusionsvorrichtung in Draufsicht mit einer doppelten Dreifachverzweigung,
- Fig. 5 bis 7: schematische Schnittdarstellungen durch eine Extrusionsvorrichtung mit Neben-Schneckenmaschinen in der Schnittebene V-V nach Fig. 2 mit Anordnungsvarianten der Entgasungsöffnungen,
- Fig. 8 und 9: analoge Schnittdarstellungen mit unterschiedlichen Verzweigungsvarianten und
- Fig. 10 bis 12: schematische Darstellungen von Extrusionsvorrichtungen in Draufsicht mit verschiedenen Zusatzmaßnahmen.

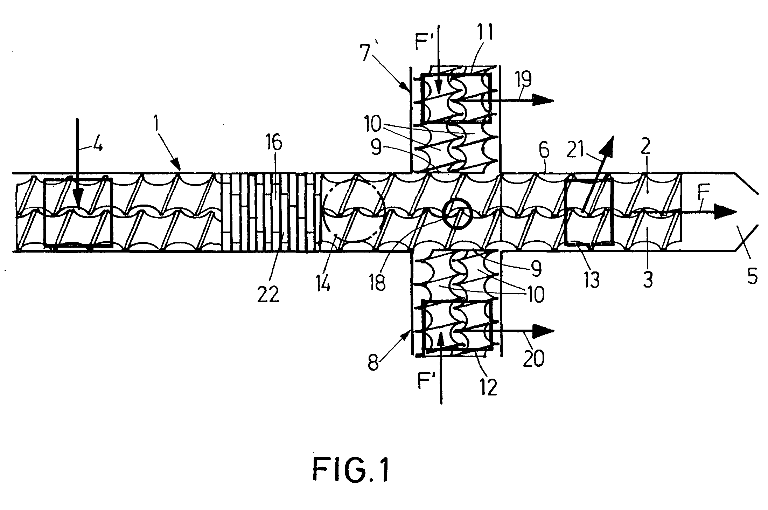

Anhand von Fig. 1 wird der bei allen dargestellten Ausführungsformen übereinstimmende Grundaufbau einer erfindungsgemäßen Extrusionsvorrichtung dargelegt. Letztere weist einen Hauptextruder 1 auf, bei dem es sich um eine Doppelschnecken-Maschine mit zwei miteinander kämmenden Schnecken 2, 3 zur Materialverarbeitung handelt. Der Hauptextruder 1 soll insbesondere zur Entgasung von flüchtigen Bestandteilen aus viskosen Medien verwendet werden. Zur Einspeisung des Materials dient die Einspeisungseinrichtung 4, bei der es sich beispielsweise um einen Trichter mit Zufuhrschnecke handelt.

Am entgegengesetzten Ende des Hauptextruders 1 ist eine Material-Austragseinrichtung 5 in Form einer Düse angeordnet. Am Gehäuse 6 des Hauptextruders ist ferner in nicht näher dargestellter, aber üblicher Weise eine Heizung vorhanden.

Am Hauptextruder 1 sind nun radial gegenüberliegend zwei Neben-Schneckenmaschinen 7, 8 angeordnet, die mit ihrem Förderraum radial in den Hauptextruder 1 münden. Die Neben-Schneckenmaschinen 7, 8 sind jeweils als Doppel-Schneckenmaschinen ausgebildet. Die Stirnflächen 9 ihrer Schnecken 10 sind eben ausgebildet und stehen in einem minimalen Abstand zu den Schnecken 2 bzw. 3 des Hauptextruders 1. An ihren dem Hauptextruder 1 abgewandten Enden sind die beiden Neben-Schneckenmaschinen 7, 8 mit Entgasungsöffnungen 11, 12 versehen, die mit Unter- oder Atmosphärendruck beaufschlagbar sind.

Mit axialem Abstand von den beiden Neben-Schneckenmaschinen 7, 8 ist eine dritte, herkömmliche Entgasungsöffnung 13 am Hauptextruder 1 vorgesehen.

Die vorstehende allgemeine Erläuterung des Erfindungsgegenstandes anhand der Fig. 1 trifft - bis auf die bei den anderen Erfindungsvarianten ausdrücklich erwähnten Ausnahmen - auf alle weiteren in den Figuren gezeigten Ausführungsbeispiele zu. Übereinstimmende Bauteile sind in diesem Zusammenhang mit identischen Bezugszeichen versehen und bedürfen damit keiner nochmaligen Erörterung.

Bei der in Fig. 1 gezeichneten Variante ist nun eine Extruderanordnung mit Gleichstromentgasung gezeigt. Hier läuft z. B. feuchtes Schüttgut über eine Einspeisungseinrichtung 4 in Form einer Einlauföffnung in den Hauptextruder 1 ein und wird über die beiden Schnecken 2, 3 zu einem Abschnitt mit Knetscheiben 16 bewegt. Dort wird das eingeführte Material aufgeschmolzen. Die dabei entstehende Dissipationswärme wirkt als Verdampfungswärme für die flüchtige Begleitsubstanz. Die Dampfentspannung findet dann unmittelbar nach der Aufschmelzzone 22 statt.

In diesem Verdampfungsbereich 14 tritt nun eine starke Ausgasung bzw. Dampfentwicklung ein, wobei die Gas- oder Dampfabführung im Beispiel gemäß Fig. 1 in Förderrichtung F vom Verdampfungsbereich stattfindet.

Zur Beherrschung der durch die hohe Gasentstehungsrate auftretenden hohen Gasgeschwindigkeiten bilden die beiden Neben-Schneckenmaschinen 7, 8 zwischen sich einen sogenannten Verzweigungsknoten 18, in dem sich der Gasstrom in drei Teilströme 19, 20, 21 aufteilt. Der Verzweigungsknoten 18 ist dabei innerhalb des geschlossenen Teils des Hauptextruders 1 angeordnet und liegt bei der Gleichstromentgasung stromabwärts bezogen auf den Verdampfungsbereich 14. Das Gas der beiden Teilströme 19, 20 wird über die radial angebrachten Neben-Schneckenmaschinen 7, 8 abgeleitet. Da die Förderrichtung F' der Schnecken 10 den Teilströmen 19 bzw. 20 entgegengesetzt ist, wird gegebenenfalls in die Neben-Schneckenmaschinen 7, 8 eintretende Schmelze in den Hauptextruder 1 zurückgefördert.

Der dritte Teilstrom 21 führt zur Entgasungsöffnung 13, die wiederum stromabwärts vom Verdampfungsbereich 14 und dem Verzweigungsknoten 18 liegt.

Eine gezielte Verteilung der Volumenrate der Teilströme 19, 20, 21 kann durch unterschiedliche Einstellungen der Saugdruckwerte an den Entgasungsöffnungen 11, 12 und 13 erreicht werden. Der anzulegende Saugdruck ist vom Dampfdruck im flüchtigen Medium abhängig und liegt überlicherweise bei der Entgasung großer Lösungsmittelmengen zwischen 200 mbar und ca. 5 bar. Vorzugsweise ist natürlich Atmosphärendruck vorzusehen.

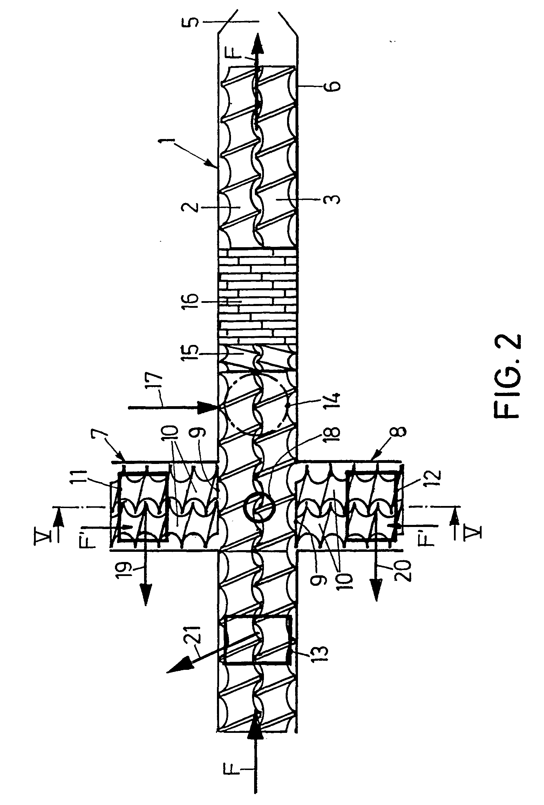

Die in Fig. 2 gezeigte Variante unterscheidet sich von Fig. 1 darin, daß eine Anordnung für Gegenstrom- bzw. Rückwärtsentgasung gezeigt ist. Hierbei ist der Verdampfungsbereich 14 in Förderrichtung F des Hauptextruders 1 stromabwärts von den Neben-Schneckenmaschinen 7, 8 angeordnet. Im stromaufwärtsliegenden Bereich der Entgasungsöffnung 21 des Hauptextruders 1 kann hier
- Fall (A): entweder Schmelze aus einer stromaufwärtsliegenden Verfahrenszone angeliefert werden, oder
- Fall (B): die Schnecken sind ungefüllt, d. h. der Verfahrensteil des Hauptextruders 1 beginnt mit einer Rückwärtsentgasung.

Ein typisches Beispiel für den Fall (A) ist die Herstellung von Polymerblends, wobei eine Polymerkomponente I als Schmelze an der Entgasungszone 21 angeliefert wird und eine Polymerkomponente II über eine Einspeisungseinrichtung 17 als feuchtes Schüttgut, als Emulsion oder als Polymerlösung (überhitzt oder nicht überhitzt) in den Hauptextruder eingegeben wird. Die flüchtige Begleitsubstanz verdampft im Verdampfungsbereich 14 aufgrund von Energiezufuhr aus der Polymerkomponente I. Der kurze gegenläufige Schneckenabschnitt 15 bildet eine Schmelzedichtung in Förderrichtung. Der Dampf strömt im Gegenstrom durch den mit Polymerschmelze I teilgefüllten Schneckenbereich zum Verzweigungsknoten 18 und verteilt sich auf die Entgasungsöffnungen 19, 20 und 21. In der Knetzone 16 werden die Polymerkomponenten I und II homogenisiert.

Als typisches Beispiel für Fall (B) gilt die Einspeisung einer unter Druck stehenden überhitzten Polymerlösung über ein geeignetes Ventil 17 als Einspeisungseinrichtung in den Verdampfungsbereich 14 des Hauptextruders. Der Lösungsmittelanteil verdampft spontan bei der Entspannung. Der Polymeranteil bildet im Staubereich 15 eine Schmelzedichtung, so daß der Lösungsmitteldampf über die stromaufliegenden Schneckengänge in Richtung Entgasungsöffnungen 19, 20, 21 gezwungen wird. Im Knetbereich 16 wird der abgekühlten Lösung durch Dissipation erneut Wärme zugeführt und verbliebenes Lösungsmittel, falls erforderlich, in weiteren Entgasungszonen entfernt. Der Lösungsmittelanteil einer Polymerlösung kann zwischen 10 % und 90 % liegen. Über eine Rückwärtsentgasung mit 3 Zweigströmen kann z. B. eine Lösung mit 70 % Lösungsmittelgehalt auf 5 % bis 10 % Lösungsmittelgehalt im Polymer aufkonzentriert werden.

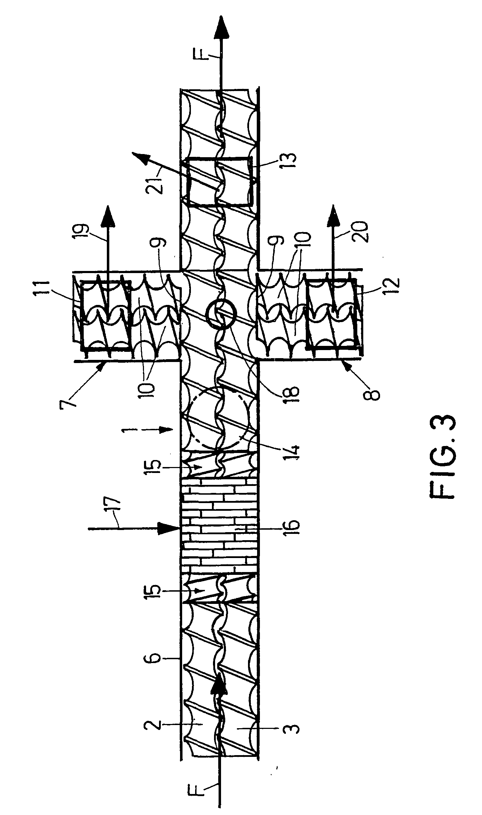

Bei der in Fig. 3 gezeigten Variante findet gleichermaßen wie in Fig. 1 eine Gleichstromentgasung mit stromabwärts vom Verdampfungsbereich 14 angeordneten Neben-Schneckenmaschinen 7, 8 und einer dritten Entgasungsöffnung 13 statt. Allerdings wird hier mit einem Schleppmittel in Form von Wasser gearbeitet, das durch eine entsprechende Einspeisungseinrichtung 17 in den Hauptextruder 1 eingegeben wird. An der Eingabestelle sind wiederum Knetscheiben 16 für eine starke Beaufschlagung des zu behandelnden Materials vorgesehen.

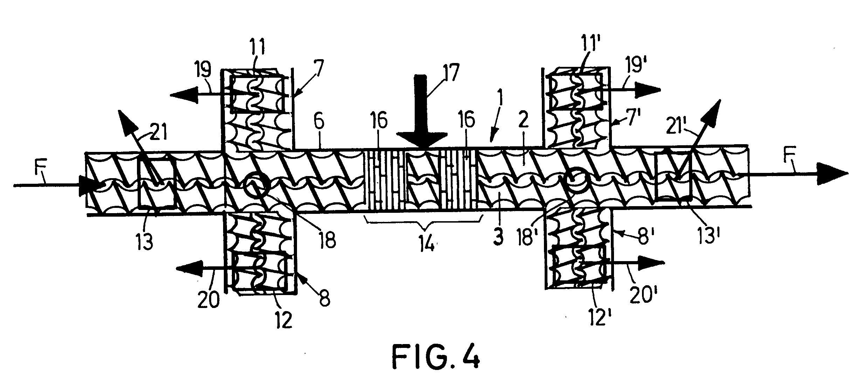

In Fig. 4 ist ein Hauptextruder 1 dargestellt, der mit einer kombinierten Gleich- und Gegenstromentgasung arbeitet. Dabei ist im wesentlichen mittig im Hauptextruder 1 durch zwei Abschnitte mit Knetscheiben 16 wiederum ein Verdampfungsbereich 14 gebildet. Sowohl stromauf- als auch stromabwärts sind nun wiederum in der beschriebenen Weise Neben-Schneckenmaschinen 7, 8, 7', 8' an den Hauptextruder 1 angesetzt. Weiter stromaufwärts bzw. stromabwärts vom Verdampfungsbereich 14 entfernt liegt schließlich die weitere Entgasungsöffnung 13, 13'. Es liegen also sowohl stromauf- als auch stromabwärts vom Verdampfungsbereich 14 zwei Dreifachverzweigungen des entstehenden Gasstromes in die Teilströme 19, 20, 21 bzw. 19', 20', 21' vor, womit besonders hohe Volumenraten des Gasstromes beherrscht werden können.

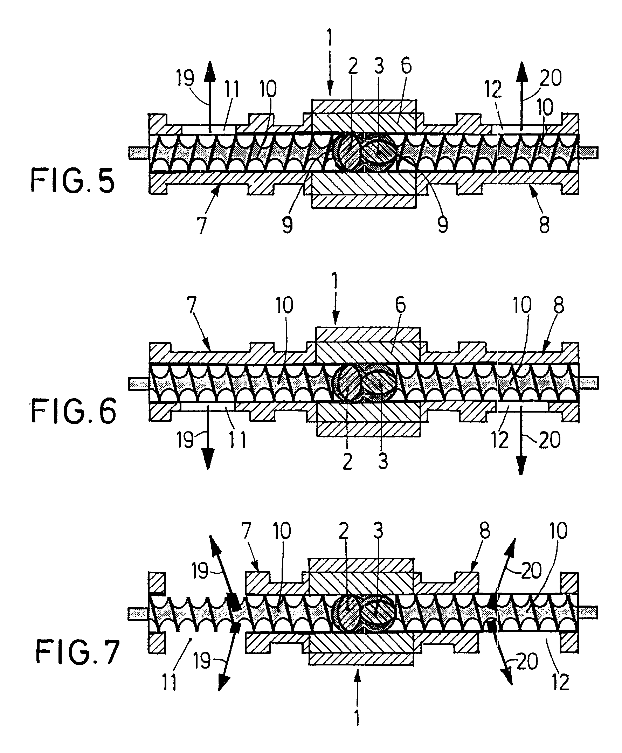

In den Fig. 5 bis 7 sind unterschiedliche Alternativen für die Entgasungsöffnungen 11, 12 an den Neben-Schneckenmaschinen 7, 8 dargestellt. Diese Entgasungsöffnungen 11, 12 können entweder oben liegen (Fig. 5) oder nach unten weisend (Fig. 6) angeordnet sein. Auch allseitig ausmündende Öffnungen 11, 12 sind denkbar (Fig. 7).

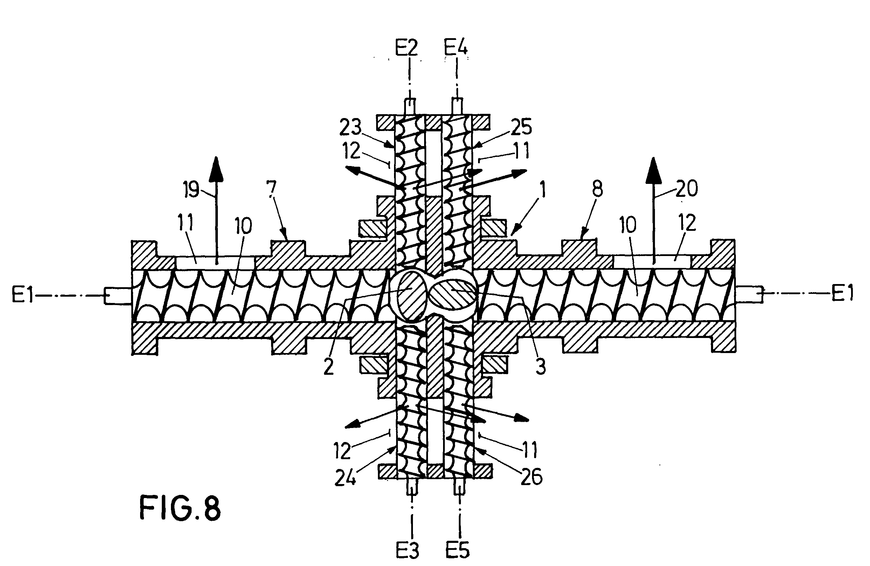

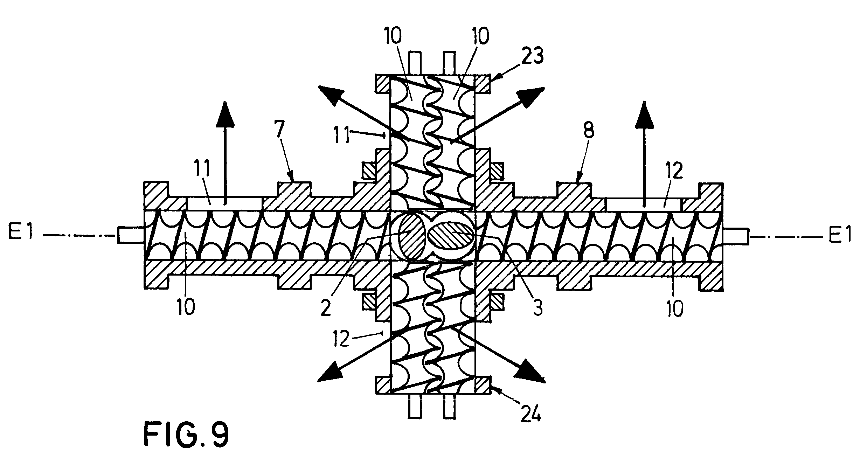

Eine spezielle Konfiguration von Neben-Schneckenmaschinen ist in den Fig. 8 bzw. 9 dargestellt.

Beim Ausführungsbeispiel gemäß Fig. 8 sind sechs Neben-Schneckenmaschinen 7, 8 (jeweils als Doppelschneckenmaschinen ausgeführt) in Radialrichtung bezüglich des Hauptextruders 1 gegenüberliegend angeordnet. Die beiden Neben-Schneckenmaschinen 7, 8 liegen dabei waagrecht, wobei die von ihren beiden Schneckenachsen aufgespannte Lageebene E1 parallel zur Förderrichtung F des Hauptextruders 1 liegt und auch mit der von den beiden Längsachsen der Schnecken 2, 3 aufgespannten Lageebene zusammenfällt.

Radial nach oben bzw. unten sind noch vier weitere Neben-Schneckenmaschinen 23, 24, 25, 26 angeordnet, um Gasmengen aus dem Hauptextruder 1 abzuführen. Die von den jeweiligen Achsen der beiden Schnecken dieser Neben-Schneckenmaschinen 23 bis 26 aufgespannten Lageebenen E2, E3, E4, E5 sind wiederum parallel zur Förderrichtung F, wobei sie jedoch senkrecht zu der von den beiden Achsen der Schnecken 2, 3 aufgespannten Lageebene stehen. In den Ebenen E2 bis E5 liegen vielmehr jeweils die Achsen der Schnecken 2, 3 selbst.

Bei der in Fig. 9 dargestellten Variante sind vier Neben-Schneckenmaschinen 7, 8, 23, 24 radial gegenüberliegend am Hauptextruder 1 zur zusätzlichen Entlüftung angebracht. Die Lageebene E1 der beiden horizontalen Neben-Schneckenmaschinen 7, 8 entspricht der im Ausführungsbeispiel gemäß Fig. 8, die Lageebene E1 liegt also horizontal und fällt mit der Lageebene, die von den beiden Achsen der Schnecken 2, 3 aufgespannt ist, zusammen.

Die von den Längsachsen der Schnecken 10 der Neben-Schneckenmaschinen 23, 24 aufgespannten Lageebenen stehen vertikal im Raum und sind rechtwinklig zur Förderrichtung F angeordnet.

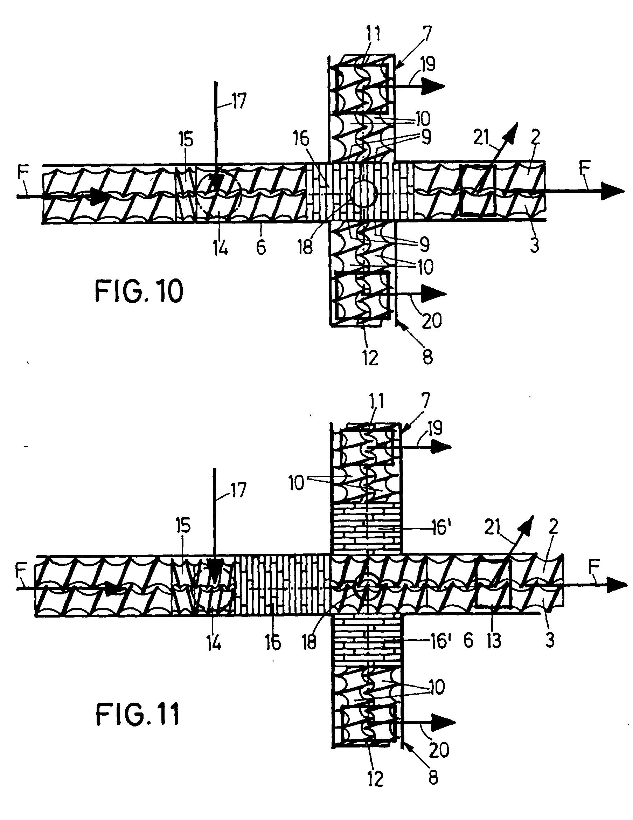

Bei der in Fig. 10 gezeigten Variante, bei der es sich grundsätzlich um eine verzweigte Entgasung über drei Teilströme 19, 20, 21 im Gleichstrom handelt, werden im Bereich des Verzweigungsknotens 18 Knetscheiben 16 im Hauptextruder 1 eingesetzt. Mit diesen können z. B. Schaumpartikel wieder eingefangen werden, die bei der Dampfentspannung aus der Schmelze gerissen wurden.

Bei einem weiteren Ausführungsbeispiel eines erfindungsgemäßen Extruders gemäß Fig. 11, der wiederum mit einer in drei Teilströme 19, 20, 21 verzweigten Gleichstromentgasung arbeitet, sind einerseits Staukörper in Form von Knetscheiben 16 zwischen dem Verdampfungsbereich 14 und dem Verzweigungsknoten 18 im Hauptextruder 1 angeordnet. Weitere Knetscheiben 16' sind im Mündungsbereich der beiden Neben-Schneckenmaschinen 7, 8 vorgesehen.

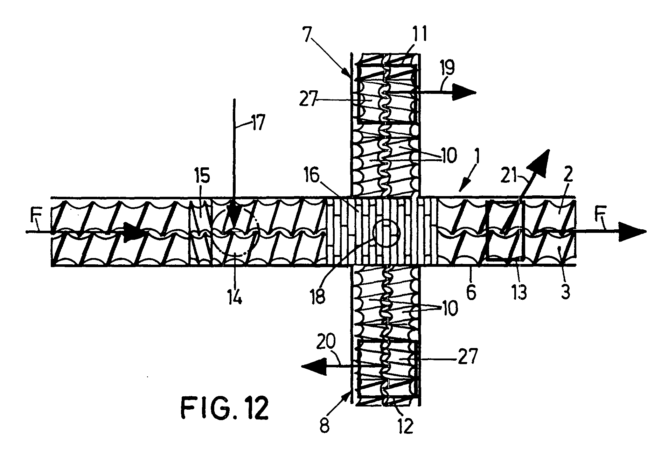

Wie in Fig. 12 angedeutet ist, sind die Schnecken 10 der Neben-Schneckenmaschinen mit Bereichen 27 umgekehrter Steigung versehen, wodurch z. B. ein Schmutzaustrag erfolgen kann. Im übrigen entspricht die Ausführungsform gemäß Fig. 12 der nach Fig. 10.

## Patentansprüche

1. Schnecken-Extrusionsvorrichtung, insbesondere Doppelschnecken-Extrusionsvorrichtung, zur Verarbeitung stark ausgasender Materialien mit
- einem Hauptextruder (1) zur eigentlichen Materialverarbeitung,
- einer Material-Einspeisungseinrichtung (4),
- einer Material-Austragseinrichtung (5),
- gegebenenfalls eine Einrichtung (17) zur Einspeisung eines Entgasungsmittels, eines Lösungsmittels, einer Emulsion, feuchter Schüttgüter, Pasten od. dgl. in einen Verdampfungsbereich (14) des Hauptextruders (1) und
- einer Entgasungseinrichtung am Hauptextruder (1) zur Ableitung des Gasstroms vom Verdampfungsbereich (14),
**dadurch gekennzeichnet, daß**
die Entgasungseinrichtung zur Verzweigung des Gasstroms in mindestens drei Teilströme (19, 20, 21) im geschlossenen Bereich des Hauptextruders (1) aus mindestens einer stromaufwärts oder stromabwärts des Verdampfungsbereiches (14) angeordneten ersten Entgasungsöffnung (13) und mindestens zwei radial bezüglich des Hauptextruders (1) gegenüberliegenden, zwischen dem Verdampfungsbereich (14) und der mindestens einen ersten Entgasungsöffnung (13) angeordneten Entgasungs-Elementen (7, 8) besteht.

2. Schnecken-Extrusionsvorrichtung nach Anspruch 1, **dadurch gekennzeichnet, daß** die mindestens zwei Entgasungselemente als radial in den Hauptextruder (1) mündende Neben-Schneckenmaschinen (7, 8; 23, 24, 25, 26) ausgebildet sind.

3. Schnecken-Extrusionsmaschine nach Anspruch 2, **dadurch gekennzeichnet, daß** die Förderrichtung der Neben-Schneckenmaschinen (7, 8; 23, 24, 25, 26) in Richtung zum Hauptextruder weist.

4. Schnecken-Extrusionsvorrichtung nach einem der Ansprüche 1 bis 3, **dadurch gekennzeichnet, daß** die Schnecken (10) der Neben-Schneckenmaschinen (7, 8; 23, 24, 25, 26) mit ebenen Stirnflächen (9) versehen sind, die in minimalem Abstand zu den Schnecken (2, 3) des Hauptextruders (1) angeordnet sind.

5. Schnecken-Extrusionsvorrichtung nach einem der Ansprüche 1 bis 3, **dadurch gekennzeichnet, daß** die Schnecken (10) der Neben-Schnekkenmaschinen (7, 8; 23, 24, 25, 26) nach außen konisch erweitert sind.

6. Schnecken-Extrusionsvorrichtung nach einem der Ansprüche 1 bis 5, **dadurch gekennzeichnet, daß** für eine kombinierte Gleich- und Gegenstromentgasung sowohl stromaufwärts, als auch stromabwärts des Verdampfungsbereiches (14) eine Entgasungseinrichtung mit jeweils einer Entgasungsöffnung (13, 13') und zwei radial gegenüberliegenden Entgasungselementen (7, 8, 7', 8') vorgesehen ist.

7. Schnecken-Extrusionsvorrichtung nach einem der Ansprüche 1 bis 6, **dadurch gekennzeichnet, daß** im Hauptextruder (1) vor den Mündungen der Neben-Schneckenmaschinen (7, 8) Staukörper (16) vorgesehen sind.

8. Schnecken-Extrusionsvorrichtung nach einem der Ansprüche 1 bis 7, **dadurch gekennzeichnet, daß** Staukörper (16) in den Neben-Schnekkenmaschinen (7, 8) angeordnet sind.

9. Schnecken-Extrusionsvorrichtung nach einem der Ansprüche 1 bis 8, **dadurch gekennzeichnet, daß** die Entgasungsöffnungen (11, 12) der Neben-Schneckenmaschinen (7, 8; 23, 24, 25, 26) nach unten oder oben weisen oder allseitig nach außen münden.

10. Schnecken-Extrusionsvorrichtung nach einem der Ansprüche 1 bis 9, **dadurch gekennzeichnet, daß** die Neben-Schneckenmaschinen (7, 8; 23, 24, 25, 26) als Doppel-Schneckenmaschinen ausgebildet sind, die derart am Hauptextruder (1) angebracht sind, daß die von ihren Schneckenachsen aufgespannte Lageebene (E1) parallel zur Förderrichtung (F) des Hauptextruders (1) liegt.

11. Schnecken-Extrusionsvorrichtung nach einem der Ansprüche 1 bis 10, **dadurch gekennzeichnet, daß** die Neben-Schneckenmaschinen (23,24) als Doppel-Schneckenmaschinen ausgebildet sind, die derart am Hauptextruder (1) angebracht sind, daß die von ihren Schneckenachsen aufgespannte Lageebene (E2, E3) rechtwinklig zur Förderrichtung (F) des Hauptextruders (1) liegt.

12. Schnecken-Extrusionsvorrichtung nach einem der Ansprüche 1 bis 11, **dadurch gekennzeichnet, daß** radial gegenüberliegende Neben-Schnekkenmaschinen (7, 8) unterschiedliche Förderrichtungen und/oder Steigungen aufweisen.

## Claims

1. A screw extruder mechanism, in particular a twin-screw extruder mechanism, for the processing of strongly outgassing materials, comprising
- a main extruder (1) for proper material processing,
- a material feed device (4),
- a material discharge device (5),
- possibly a device (17) for the supply of a degassing agent, a solvent, an emulsion, moist bulk material, pastes or the like into a portion of evaporation (14) of the main extruder (1), and
- a degassing device on the main extruder (1) for the discharge of the gas stream from the portion of evaporation (14),
**characterized in that**
for the gas stream to branch into at least three separate streams (19, 20, 21) in the closed portion of the main extruder (1), the degassing device comprises at least a first degassing port (13) disposed upstream or downstream of the portion of evaporation (14) and at least two degassing elements (7, 8) opposed to each other radially in relation to the main extruder (1) and disposed between the portion of evaporation (14) and the at least one first degassing port (13).

2. A screw extruder mechanism according to claim 1, **characterized in that** the at least two degassing elements are ancillary screw extruders (7, 8; 23, 24, 25, 26) which open radially into the main extruder (1).

3. A screw extruder mechanism according to claim 2, **characterized in that** the conveying direction of the ancillary screw extruders (7, 8; 23, 24, 25, 26) points in a direction towards the main extruder.

4. A screw extruder mechanism according to one of claims 1 to 3, **characterized in that** the screws (10) of the ancillary screw extruders (7, 8; 23, 24, 25, 26) are provided with plane faces (9) which are disposed at a minimum distance to the screws (2, 3) of the main extruder (1).

5. A screw extruder mechanism according to one of claims 1 to 3, **characterized in that** the screws (10) of the ancillary screw extruders (7, 8; 23, 24, 25, 26) expand conically outwards.

6. A screw extruder mechanism according to one of the claims 1 to 5, **characterized in that** for combined cocurrent and countercurrent flow degassing, a degassing device is disposed upstream as well as downstream of the portion of evaporation (14), comprising a degassing port (13, 13') and two radially opposed degassing elements (7, 8, 7', 8').

7. A screw extruder mechanism according to one of claims 1 to 6, **characterized in that** damming elements (16) are disposed in the main extruder (1) before the mouths of the ancillary screw extruders (7, 8).

8. A screw extruder mechanism according to one of claims 1 to 7, **characterized in that** damming elements (16) are disposed in the ancillary screw extruders (7, 8).

9. A screw extruder mechanism according to one of claims 1 to 8, **characterized in that** the degassing ports (11, 12) of the ancillary screw extruders (7, 8; 23, 24, 25, 26) are directed downwards or upwards or discharge all-over externally.

10. A screw extruder mechanism according to one of claims 1 to 9, **characterized in that** the ancillary screw extruders (7, 8; 23, 24, 25, 26) are twin-screw extruders which are mounted on the main extruder (1) in such a way that the positional plane (E1) spanned by the axes of their screws is parallel to the conveying direction (F) of the main extruder (1).

11. A screw extruder mechanism according to one of claims 1 to 10, **characterized in that** the ancillary screw extruders (23, 24) are twin-screw extruders which are mounted on the main extruder (1) in such a way that the positional plane (E2, E3) spanned by the axes of their screws is at right angles to the conveying direction (F) of the main extruder (1).

12. A screw extruder mechanism according to one of claims 1 to 11, **characterized in that** radially opposed ancillary screw extruders (7, 8) have varying conveying directions and/or pitches.

## Revendications

1. Dispositif d'extrusion à vis, et notamment dispositif d'extrusion à deux vis, pour le traitement des matières émettant des gaz en quantité élevée lequel comporte :
- une extrudeuse principale (1) pour le traitement proprement dit de la matière,
- un dispositif d'alimentation en matière (4),
- un dispositif de sortie de la matière (5),
- éventuellement un dispositif (17) destiné à introduire un agent de dégazage, un solvant, une émulsion, des produits en vrac humides, des pâtes ou analogue dans une zone de vaporisation (14) de l'extrudeuse principale (1), et
- un dispositif de dégazage placé sur l'extrudeuse principale (1) et destiné à évacuer le courant de gaz hors de la zone de vaporisation (14),
**caractérisé en ce que**
le dispositif de dégazage servant à partager le courant de gaz en au moins trois courants partiels (19, 20, 21) dans la partie fermée de l'extrudeuse principale (1) est constitué d'au moins un premier orifice de dégazage (13) disposé en amont ou en aval de la zone de vaporisation (14) et d'au moins deux éléments de dégazage (7, 8) opposés en direction radiale par rapport à l'extrudeuse principale (1) disposés entre la zone de vaporisation (14) et le ou les premiers orifices de dégazage (13).

2. Dispositif d'extrusion à vis selon la revendication 1, **caractérisé en ce que** les deux ou plus de deux éléments de dégazage sont réalisés sous forme de machines auxiliaires à vis (7, 8 ; 23, 24, 25, 26) débouchant en direction radiale dans l'extrudeuse principale (1).

3. Dispositif d'extrusion à vis selon la revendication 2, **caractérisé en ce que** le sens de transport des machines auxiliaires à vis (7, 8 ; 23, 24, 25, 26) est dirigé vers l'extrudeuse principale.

4. Dispositif d'extrusion à vis selon l'une des revendications 1 à 3, **caractérisé en ce que** les vis (10) des machines auxiliaires à vis (7, 8 ; 23, 24, 25, 26) ont une face frontale (9) plane qui est disposée à distance minimale des vis (2, 3) de l'extrudeuse principale (1).

5. Dispositif d'extrusion à vis selon l'une des revendications 1 à 3, **caractérisé en ce que** les vis (10) des machines auxiliaires à vis (7, 8 ; 23, 24, 25, 26) s'élargissent de manière conique vers l'extérieur.

6. Dispositif d'extrusion à vis selon l'une des revendications 1 à 5, **caractérisé en ce que**, pour permettre un dégazage combiné dans le sens du courant et à contre-courant, il est prévu non seulement en amont mais aussi en aval de la zone de vaporisation (14) un dispositif de dégazage comportant à chaque fois un orifice de dégazage (13, 13') et deux éléments de dégazage (7, 8, 7', 8') opposés en direction radiale.

7. Dispositif d'extrusion à vis selon l'une des revendications 1 à 6, **caractérisé en ce qu'**il est prévu, dans l'extrudeuse principale (1), des éléments de retenue (16) devant les bouches des machines auxiliaires à vis (7, 8).

8. Dispositif d'extrusion à vis selon l'une des revendications 1 à 7, **caractérisé en ce que** des éléments de retenue (16) sont disposés dans les machines auxiliaires à vis (7, 8).

9. Dispositif d'extrusion à vis selon l'une des revendications 1 à 8, **caractérisé en ce que** les orifices de dégazage (11, 12) des machines auxiliaires à vis (7, 8 ; 23, 24, 25, 26) sont dirigés vers le bas ou vers le haut ou encore débouchent à l'extérieur de tous les côtés.

10. Dispositif d'extrusion à vis selon l'une des revendications 1 à 9, **caractérisé en ce que** les machines auxiliaires à vis (7, 8 ; 23, 24, 25, 26) sont réalisées sous forme de machines à deux vis qui sont installées sur l'extrudeuse principale (1) de manière que le plan (E1) défini par les axes de leurs vis soit parallèle à la direction de transport (F) de l'extrudeuse principale (1).

11. Dispositif d'extrusion à vis selon l'une des revendications 1 à 10, **caractérisé en ce que** les machines auxiliaires à vis (23, 24) sont réalisées sous forme de machines à deux vis qui sont installées sur l'extrudeuse principale (1) de manière que le plan (E2, E3) défini par les axes de leurs vis soit perpendiculaire à la direction de transport (F) de l'extrudeuse principale (1).

12. Dispositif d'extrusion à vis selon l'une des revendications 1 à 11, **caractérisé en ce que** les machines auxiliaires à vis (7, 8) opposées en direction radiale ont différents sens de transport et/ou pas.
